(19) Europäisches Patentamt

European Patent Office

Office européen des brevets

(11) Veröffentlichungsnummer: **0 037 023**
**B1**

(12) # EUROPÄISCHE PATENTSCHRIFT

(45) Veröffentlichungstag der Patentschrift:
**30.05.84**

(21) Anmeldenummer: **81102078.3**

(22) Anmeldetag: **20.03.81**

(51) Int. Cl.³: **B 05 D 7/22,** B 05 C 7/00,
A 22 C 13/00

(54) Verfahren zur Herstellung einer schlauchförmigen Verpackungshülle mit einem Überzug auf der Innenseite sowie Vorrichtung zur Durchführung des Verfahrens.

(30) Priorität: **28.03.80 DE 3012250**

(43) Veröffentlichungstag der Anmeldung:
**07.10.81 Patentblatt 81/40**

(45) Bekanntmachung des Hinweises auf die Patenterteilung:
**30.05.84 Patentblatt 84/22**

(84) Benannte Vertragsstaaten:
**AT BE CH DE FR GB IT LI LU NL SE**

(56) Entgegenhaltungen:
**EP - A - 0 001 545
DE - A - 1 786 517
DE - A - 2 505 207
DE - A - 2 557 994
DE - A - 2 659 000
DE - A - 2 801 038
DE - A - 2 856 253
DE - B - 1 492 708
US - A - 3 567 495**

(73) Patentinhaber: **HOECHST AKTIENGESELLSCHAFT,
Postfach 80 03 20, D-6230 Frankfurt am Main 80 (DE)**

(72) Erfinder: **Heinrich, Wolfgang, Dr., Friedrichstrasse 41,
D-7335 Salach (DE)**
Erfinder: **Bytzek, Max, Pappelweg 13, D-6200 Wiesbaden
(DE)**
Erfinder: **Hammer, Klaus-Dieter, Dr., An der
Hasenquelle 25, D-6500 Mainz-Mombach (DE)**
Erfinder: **Schröder, Martin, Lippestrasse 14,
D-6200 Wiesbaden (DE)**

## Beschreibung

Die Erfindung betrifft ein Verfahren zur Herstellung einer schlauchförmigen Verpackungshülle von der im Oberbegriff des Anspruchs 1 genannten Art sowie eine Vorrichtung der im Oberbegriff des Anspruchs 7 genannten Art zur Durchführung des Verfahrens.

Dieser Stand der Technik ist aus der DE-B-1 492 708 bekannt.

Die nach dem erfindungsgemässen Verfahren hergestellte Verpackungshülle wird vorzugsweise für pastöse Lebensmittel, insbesondere als künstliche Wursthaut für Brüh- und Kochwurst verwendet.

In der GB-A-1 201 830 ist ein Verfahren zur Innenbeschichtung schlauchförmiger Verpackungshüllen aus Cellulosehydrat mit wässriger Kunststoff-Dispersion beschrieben, bei dem man den Cellulosehydratschlauch fortlaufend horizontal durch den Quetschspalt eines vertikalen Quetschwalzenpaares hindurchführt und ihn danach mittels einer Umlenkrolle in die Vertikale umlenkt. Im Hohlraum des aus dem Spalt des Quetschwalzenpaares austretenden Schlauchteils befindet sich eine bestimmte Menge wässriger Kunststoff-Dispersion als Beschichtungsflüssigkeit. Der vertikal verlaufende Schlauch wird oberhalb des Spiegels der Beschichtungsflüssigkeit in einem nach oben gerichteten Trockentunnel mit Wärme beaufschlagt.

Aus der DE-A-2 801 038 ist ein Verfahren zur Innenbeschichtung von Schläuchen bekannt, bei dem man einen Schlauch aus Kunststoff oder dichtem Gewebe fortlaufend durch den Dosierspalt eines vertikalen Quetschwalzenpaares führt, wobei der Schlauch flachliegend schräg in Richtung von unten nach oben auf dieses zugeführt wird; der Schlauch liegt vor Eintritt in den Spalt des Quetschwalzenpaares zunächst flachliegend dem Umfang der unteren Walze des Walzenpaares und nach Austritt aus dem Dosierspalt der oberen Walze flachliegend jeweils teilweise an. Nach Abheben des flachliegenden Schlauches von der Oberfläche der oberen Walze des Walzenpaares verläuft er von unten nach oben schräg ansteigend.

Die Beschichtungsflüssigkeit befindet sich im Schlauchteil — in Schlauchfortbewegungsrichtung betrachtet — vor dem Quetschwalzenpaar.

Bei einem in der US-A-2 901 358 beschriebenen Verfahren zur Innenbeschichtung von Schläuchen aus Cellulosehydrat mit wässriger Kunststofflösung wird der zu beschichtende Schlauch flachliegend zunächst horizontal geführt, dann unter teilweiser Umschlingung des Umfangs einer Walze eines horizontalen Quetschwalzenpaares durch den Spalt desselben hindurch und danach vertikal in Richtung von unten nach oben verlaufend geführt. Im Schlauchhohlraum oberhalb des Quetschspalts des Walzenpaares ist eine bestimmte Menge Beschichtungsflüssigkeit eingeschlossen. Der beschichtete Schlauch durchläuft ein erstes Quetschwalzenpaar, verbleibt danach im flachgelegten Zustand bis zum Erreichen eines zweiten Quetschwalzenpaares und wird dann im aufgeblasenen Zustand getrocknet, wobei er in waagrechter Richtung eine Trockeneinrichtung durchläuft.

Weder dieses erste noch dieses zweite Quetschwalzenpaar sind jedoch zur Dosierung der Beschichtungsflüssigkeit geeignet. Das gleiche Verfahrensprinzip ist auch aus der DE-B-1 492 708 bekannt. Nach dieser Druckschrift wird der Schlauch mit Beschichtungsflüssigkeit unter Bildung einer Schlauchschlaufe umgelenkt, oberhalb des Spiegels der Beschichtungsflüssigkeit vertikal durch den Spalt von Quetschwalzen hindurchgeführt und bis zum Erreichen eines waagrechten Trockenkanals im flachgelegten Zustand gehalten.

Diese bekannten Verfahren bzw. Vorrichtungen zeigen den Nachteil, dass der erhaltene Überzug auf der Schlauchinnenseite relativ ungleichmässig dick ausgebildet ist, insbesondere wenn die Überzugsdicke relativ gross ist.

Den bekannten Verfahren zur Innenbeschichtung von Schläuchen aus Cellulosehydrat mit wässriger Kunststoff-Dispersion ist der Nachteil gemeinsam, dass die wegen des hohen Wassergehalts der verwendeten Kunststoff-Dispersion stark wasserdurchfeuchteten Cellulosehydratschläuche beim anschliessenden Trocknen die Neigung haben, in unerwünschter Weise ihre Dimension durch Schrumpfung zu verändern. Ferner ist bei Verwendung von wässrigen Kunststoff-Dispersionen mit relativ niedrigem Anteil an dispergiertem Kunststoff die durch Wärmeeinwirkung zu vertreibende und durch Diffusion durch die Schlauchwand nach aussen zu transportierende Wassermenge gross im Verhältnis zur Menge des dispergierten Kunststoffanteils in der Dispersion. Die bekannten Verfahren sind demnach energetisch unvorteilhaft.

Nachfolgend soll unter einem horizontalen Walzenpaar ein solches verstanden werden, bei dem durch die parallelen Walzachsen eine gemeinsame, horizontale Ebene legbar ist.

Unter einem vertikalen Walzenpaar ist definitionsgemäss ein solches zu verstehen, bei dem die parallelen Achsen seiner Walzen sich in einer gemeinsamen vertikalen Ebene erstrecken.

Der vorliegenden Erfindung liegt die Aufgabe zugrunde, ein Verfahren zur Ausbildung eines gleichmässig dicken unterbrechungsfreien Filmüberzugs aus synthetischem Polymerisat auf der Innenseite eines Schlauchs aus Cellulosehydrat unter Verwendung wässriger Kunststoff-Dispersion als Beschichtungsflüssigkeit vorzuschlagen, das energetisch vorteilhaft durchführbar ist und bei dem bei der Verfahrensdurchführung eine unerwünschte Dimensionsänderung des Schlauches durch Schrumpfung praktisch nicht eintritt.

Die der Erfindung zugrundeliegende Aufgabe wird gelöst durch ein Verfahren mit den im Anspruch 1 genannten Merkmalen sowie durch die im Anspruch 7 angegebene Vorrichtung. Die Unteransprüche betreffen Weiterbildungen des Verfahrens bzw. der Vorrichtung.

Bei der Durchführung des Verfahrens wird der Schlauch fortlaufend von einer Rolle abgewickelt und mit stetiger Geschwindigkeit längsaxial fortbewegt und als letzten Schritt bei der Verfahrensdurchführung fortlaufend auf eine rotierbar ausgebildete, antreibbare und angetriebene Vorratsrolle aufwickelt.

Das Verfahren wird in der Weise durchgeführt, dass der Schlauch vorteilhaft mit einer Geschwindigkeit im Bereich von 8 bis 120 m/min fortbewegt wird, insbesondere vorteilhaft ist eine Fortbewegungsgeschwindigkeit des Schlauchs im Bereich zwischen 20 und 80 m/min.

Zur Durchführung des Verfahrens wird eine wässrige Kunststoff-Dispersion verwendet, die einen im Verhältnis zur Menge des Dispersionsmittels hohen Anteil an dispergiertem Kunststoff besitzt. Als wässrige Kunststoff-Dispersion mit hohem Anteil an dispergiertem Kunststoff, bezogen auf das Gesamtgewicht der wässrigen Dispersion, gilt eine solche, die wenigstens 20 Gew.-% dispergierten Kunststoff enthält, besonders vorteilhaft sind wässrige Kunststoff-Dispersionen, die einen Anteil im Bereich von 20 bis 40 Gew.-% dispergierten Kunststoff, bezogen auf das Gesamtgewicht der Dispersion, enthalten.

Zur Durchführung des Verfahrens geeignete wässrige Kunststoff-Dispersionen sind insbesondere solche, deren dispergierter Kunststoff befähigt ist, nach Vertreiben des Dispersionsmittels durch hinreichende Wärme, Filme zu bilden, insbesondere solche, die praktisch undurchlässig für Wasser und Wasserdampf sind. Bevorzugt sind dabei solche wässrigen Kunststoff-Dispersionen, die als dispergierten Kunststoffanteil Copolymerisate mit überwiegendem Anteil an copolymerisiertem Vinylidenchlorid aufweisen, vorteilhaft solche, die wenigstens 75 Gew.-% copolymerisiertes Vinylidenchlorid umfassen. Ganz besonders geeignet sind solche wässrigen Kunststoff-Dispersionen genannter Konzentration, die als dispergierten Kunststoffanteil Copolymerisate enthalten, die in der DE-B-2 512 995 sowie der DE-C-2 512 994 beschrieben sind. Die genannten Kunststoffe bzw. Kunststoff-Dispersionen sind nicht Gegenstand der vorliegenden Erfindung.

Der zur Durchführung der Erfindung zur Verwendung gelangende, bevorzugt faserverstärkte Cellulosehydratschlauch hat vorteilhaft einen Quellwert (Wasserrückhaltevermögen) im Bereich von 120 bis 140% (DIN 53 814).

Der Cellulosehydratschlauch besitzt beispielsweise eine Wanddicke im Bereich von ca. 30 bis 300 $\mu$m, vorteilhaft eine solche im Bereich von 80 bis 120 $\mu$m.

Unter einem faserverstärkten Cellulosehydratschlauch soll ein solcher verstanden werden, der eine in seine Wandung eingelagerte Faserbahn enthält. Die Fasereinlage in der Schlauchwand hindert die Diffusion von Wasser durch die Schlauchwand nicht.

Der bevorzugt faserverstärkte Cellulosehydratschlauch enthält in seiner Wandung vorteilhaft einen Wasseranteil im Bereich von 8 bis 12%, bezogen auf das Gesamtgewicht des Schlauchs sowie einen Anteil im Bereich von 18 bis 24 Gew.-%, vorteilhaft einen solchen von 22 Gew.-%, zur Weichmachung von Cellulosehydrat befähigtem, chemischem Mittel, beispielsweise Glycerin, Glykol oder Polyglykol.

Die gewichtsprozentualen Angaben beziehen sich dabei jeweils auf das Gesamtgewicht des faserverstärkten Cellulosehydratschlauchs.

Der wie vorstehend individualisierte, bevorzugt faserverstärkte sowie chemisches Weichmachungsmittel und Wasser enthaltende Cellulosehydratschlauch ist als solcher nicht Gegenstand der vorliegenden Erfindung.

Der Schlauch besitzt auf seiner Innenseite eine für Wasser sowie Wasserdampf durchlässige Schicht aus chemischem Mittel, beispielsweise eine Schicht aus einem wasserunlöslichen, durch Wärmehärtung gebildeten Reaktionsprodukt aus Epichlorhydrin mit einem Polyamin-Polyamid, beispielsweise einer Dicke entsprechend einem Flächengewicht von beispielsweise 30 bis 100 mg/m$^2$ des genannten Reaktionsprodukts; die genannte Schicht wirkt haftvermittelnd und führt beim Verfahrenserzeugnis zur festen Bindung des Kunststoffüberzugs ans Substrat. Bezeichnete Cellulosehydratschläuche mit Haftschicht sind per se nicht Gegenstand der vorliegenden Erfindung.

Als Ausgangsschlauch, Verfahrensausgangsprodukt, wird ein vorteilhaft faserverstärkter Schlauch aus Cellulosehydrat bezeichnet und verwendet, der einen Quellwert von 120 bis 140%, beispielsweise ca. 130%, einen Wassergehalt von 8 bis 12 Gew.-%, beispielsweise einen von 10 Gew.-%, und einen Anteil an Glycerin als Weichmacher von 18 bis 24 Gew.-%, beispielsweise einen solchen von 22 Gew.-%, enthält und auf seiner Innenseite eine wasser- und wasserdampfdurchlässige, dünne haftvermittelnde Schicht aus chemischer Substanz, beispielsweise eine Schicht einer Dicke entsprechend 30 bis 100 mg/m$^2$ eines wasserunlöslichen Reaktionsprodukts aus Epichlorhydrin und einem Polyamin-Polyamid, besitzt.

Das Verfahren wird in der Weise durchgeführt, dass der Kunststoff-Filmüberzug auf der Innenseite des Verfahrensendprodukts (Verfahrenserzeugnis) eine Dicke entsprechend einem Flächengewicht im Bereich von vorteilhaft 6 bis 20 g Kunststoff pro m$^2$ Substratoberfläche, bevorzugt 8 bis 12 g Kunststoff pro m$^2$ Substratoberfläche, besitzt.

Der Filmüberzug ist physikalisch homogen, er ist gleichmässig dick sowie unterbrechungsfrei.

Nachfolgend soll die Durchführung des erfindungsgemässen Verfahrens beispielhaft beschrieben werden, wobei zu dessen Verwirklichung eine besonders geeignete Vorrichtung zur Verwendung gelangt und beschrieben wird.

Der Ausgangsschlauch hat beispielsweise einen Durchmesser von 90 mm und zeigt eine flachgelegte Breite von 143 mm.

Auf einer drehbar ausgebildeten, ortsfest gelagerten Vorratstrommel ist ein langes Stück des genannten Schlauchs, beispielsweise ein solches einer Länge von 350 m, flachliegend aufgewickelt.

Von der Vorratsrolle wird der Schlauch fortlaufend abgewickelt und in längsaxialer Richtung unter Bildung einer Schlauchschlaufe und zunächst in Richtung von oben nach unten und dann nach Umlenkung, beispielsweise durch eine drehbar ausgebildete Umlenkrolle, von unten nach oben mit gleichbleibender Geschwindigkeit, beispielsweise 30 bis 40 m/min, fortbewegt. Im Hohlraumm des die Schlauchschlaufe bildenden Schlauchstücks befindet sich eine bestimmte Menge wässriger Kunststoff-Dispersion, beispielsweise 4 Liter einer beispielsweise 30 gew.%igen Dispersion, deren dispergierter Kunststoffanteil beispielsweise zu 88 Gew.-% aus copolymerisiertem Vinylidenchlorid, zu 3 Gew.-% aus copolymerisierter Acrylsäure, zu 4 Gew.-% aus copolymerisiertem Acrylnitril und zu 5 Gew.-% aus copolymerisiertem Acrylsäuremethylester besteht, wobei die gewichtsprozentualen Angaben sich jeweils auf das Gesamtgewicht des dispergierten Copolymerisats beziehen. Eine Dispersion der genannten Konzentration ist herstellbar, indem man beispielsweise von einer solchen ausgeht, die eine relativ hohe Konzentration, z.B. 55 Gew.-% an dispergiertem Copolymerisatanteil enthält und diese durch Verdünnen mit Wasser auf die für die Verfahrensdurchführung geeignete Konzentration bringt.

Der mit einer vorbestimmten Menge Beschichtungsflüssigkeit in Form wässriger Kunststoff-Dispersion der genannten Konzentration gefüllte Schlauch wird in Form einer Schlauchschlaufe längsaxial in Richtung seiner Fortbewegung zunächst von oben nach unten und dann nach Umlenkung, beispielsweise mit Hilfe einer Umlenkrolle, vertikal und in Richtung von unten nach oben geführt.

Die zur Beschichtung der Innenseite der Gesamtlänge des verwendeten Cellulosehydratschlauchs mit Kunststoff-Filmüberzug erforderliche genannte Vorratsmenge wässriger Kunststoff-Dispersion, die zu Verfahrensbeginn in den Hohlraum des Schlauchs eingefüllt wird, ist derart bemessen, dass der Hohlraum des vertikalen Schlauchschlaufenteils teilweise mit Beschichtungsflüssigkeit gefüllt ist.

Hinreichend weit oberhalb des Spiegels der im vertikalen Schlauchschlaufenteil befindlichen Teilmenge des Beschichtungsflüssigkeitsvorrats wird der Schlauch fortlaufend und entlang einer geraden, linienartig schmalen Zone, die sich parallel zum genannten Flüssigkeitsspiegel erstreckt, teilweise flachgelegt.

Unter teilweisem Flachlegen des Schlauches ist zu verstehen, dass die Massnahme zu einem Schlauch führt, der im Bereich seiner teilweisen Flachlegung durch eine Raumform individualisiert ist, bei der er einen Hohlraum besitzt, dessen Querschnitt praktisch über die gesamte Hohlraumbreite gleich hoch ist; der Abstand der parallel zueinander verlaufenden geraden Teile der Schlauchwand wird dabei in Abhängigkeit von Fortbewegungsgeschwindigkeit des Schlauchs und Konzentration der wässrigen Kunststoff-Dispersion vorteilhaft derart bemessen, dass deren Innenseiten einen Spaltraum begrenzen, der der doppelten Schlauchwanddicke zuzüglich zweimal der Dicke einer solchen flüssigen Schicht aus wässriger Kunststoff-Dispersion genannter Konzentration entspricht, die nach Vertreiben des Dispersionsmittels zu einem Filmüberzug einer Dicke entsprechend einem Flächengewicht im Bereich von vorteilhaft 6 bis 20 g Kunststoff pro m$^2$ Innenseite des Verfahrensprodukts führt.

Die Formulierung «Schlauch mit Stützluft in seinem Hohlraum und flüssiger dünner Schicht aus wässriger Kunststoff-Dispersion bezeichneter Konzentration auf seiner Innenseite» soll definitionsgemäss sowohl Schlauchteile umfassen, die elliptischen Querschnitt besitzen oder die im Querschnitt kreisförmig bzw. praktisch kreisförmig sind, als auch mit Stützluft gefüllte Schlauchteile mit flüssiger dünner Schicht aus wässriger Kunststoff-Dispersion der genannten Konzentratin auf ihrer Innenseite, die in ihrer Raumform dadurch bestimmt sind, dass sie einen Hohlraum besitzen, dessen Querschnitt praktisch über die gesamte Hohlraumbreite gleich hoch ist und die parallel zueinander verlaufenden geraden Teile der Schlauchwand einen solchen Abstand voneinander haben, dass die sich auf ihren Innenseiten befindlichen flüssigen dünnen Schichten aus wässriger Kunststoff-Dispersion nicht berühren.

Unter einer dünnen, flüssigen Schicht aus wässriger Kunststoff-Dispersion auf der Schlauchinnenseite des mit Stützluft gefüllten Schlauchs, soll eine solche verstanden werden, die eine geringere Dicke besitzt als die auf der Innenseite des vertikal geführten Schlauchs vor seiner teilweisen Flachlegung im Dosierspalt des Walzenpaares und die nach Vertreibung des Dispersionsmittels einen unterbrechungsfreien, gleichmässig dicken Filmüberzug einer Dicke entsprechend einem Flächengewicht von vorteilhaft 6 bis 20 g Kunststoff pro m$^2$ Substratoberfläche ergibt. Die Abstimmung der genannten Verfahrensparameter aufeinander kann für den jeweiligen Fall durch wenige und einfache Vorversuche in einfacher Weise ermittelt werden.

Der Ausdruck «Schlauch mit Stützluft im Schlauchhohlraum» bezieht sich in seinen beiden Raumformvarianten auf den aus dem Dosierspalt des horizontalen Walzenpaares austretenden vertikal in Richtung von unten nach oben verlaufenden Schlauch mit flüssiger dünner Schicht aus wässriger Kunststoff-Dispersion auf der Innenseite.

Die jeweilige Form der Schläuche mit Stützluft im Hohlraum wird durch zur Aufrechterhaltung ihrer angestrebten Querschnittsform hinreichenden Stützluftdruck gewährleistet; bei mit Stützluft gefüllten Schläuchen mit kreisförmigem Querschnitt kann die Stützluft auch einen Druck auf die Schlauchinnenwand ausüben, der in geringem Umfang radiale Dehnung des Schlauchs zu bewirken vermag.

Die kontinuierliche teilweise Flachlegung des vertikal in Richtung von unten nach oben fortbewegten Schlauchs mit flüssiger relativ dicker Schicht aus wässriger Kunststoff-Dispersion auf seiner Innenseite erfolgt dadurch, dass man ihn fortlaufend durch den auf eine bestimmte Spaltbreite eingestellten Dosierspalt eines horizontalen Walzenpaares hindurchführt. Die dabei durch die Walzen des Walzenpaares auf den Schlauch ausgeübte Druckkraft führt nach Massgabe der eingestellten Breite des Dosierspalts des Walzenpaares zur entsprechenden teilweisen Flachlegung des Schlauchs in diesem. Das Flachlegen des Schlauchs vor dem Einlaufen in den Dosierspalt wird vorteilhafterweise durch Faltenbildung verhindernde Massnahmen unterstützt, wie sie z.B. bei der Herstellung extrudierter Kunststoffschlauchfolien üblich sind, z.B. mit Hilfe von konisch auf den Dosierspalt zulaufende Leitbleche, Leitwalzen, Förderbänder oder Rollenbahnen.

Der Dosierspalt des horizontalen Walzenpaares hat vorteilhaft eine Breite im Bereich von 200 bis 400 $\mu$m, bevorzugt im Bereich von 220 bis 300 $\mu$m.

Die Breite des Dosierspalts wird in entsprechender Abstimmung mit den beiden anderen Parametern so gewählt, dass sie der doppelten Wanddicke des Schlauchs zuzüglich zweimal derjenigen Dicke einer flüssigen, dünnen Schicht aus wässriger Kunststoff-Dispersion auf der Innenseite des Schlauchs mit Stützluft in seinem Hohlraum entspricht, die nach Vertreiben des Dispersionsmittels aus ihr einen Kunststoff-Filmüberzug einer Dicke, entsprechend einem Flächengewicht im Bereich von vorteilhaft 6 bis 20 g/m² Substratoberfläche, ergibt.

Die Fortbewegungsgeschwindigkeit des Schlauchs, beispielsweise 30 m/min, die Konzentration der verwendeten wässrigen Kunststoff-Dispersion, beispielsweise 30 Gew.-%, sowie die Breite des Dosierspalts, beispielsweise 230 $\mu$m, des horizontalen Walzenpaares bestimmen in Zusammenwirkung die Dicke, beispielsweise 10 $\mu$m, der flüssigen, dünnen Schicht aus wässriger Kunststoff-Dispersion, die sich auf der Innenseite des den Dosierspalt verlassenden Schlauchs befindet.

Bei Bedarf kann die Breite des Dosierspalts des horizontalen Walzenpaares oder/und die Schlauchfortbewegungsgeschwindigkeit auch ohne Unterbrechung des Verfahrensablaufs verändert werden.

Das teilweise Flachlegen des Schlauchs im Dosierspalt des horizontalen Walzenpaares hat nicht nur zur Folge, dass sich auf der Innenseite des «Schlauchs mit Stützluft in seinem Hohlraum» eine flüssige, dünne Schicht mit bestimmtem Flächengewicht ausbildet, sondern auch dass diese dünne Schicht über die gesamte Länge des Schlauchs sehr gleichmässig ist. (Dosier- sowie Vergleichmässigungswirkung des Dosierspalts des horizontalen Walzenpaares.)

Die teilweise Flachlegung des Schlauchs im Dosierspalt führt nach Massgabe der eingestellten Spaltbreite und in Abhängigkeit von der Fortbewegungsgeschwindigkeit des Schlauchs sowie der Konzentration der verwendeten wässrigen Kunststoff-Dispersion zum Anstau wässriger Dispersion im Schlauchhohlraum unmittelbar vor dem Dosierspalt bzw. im Hohlraum des vom Dosierspalt teilweise flachgelegten Schlauchteils und zur völligen Ausfüllung des Hohlraums des genannten Schlauchbereichs.

Die Abstimmung der genannten Verfahrensparameter aufeinander kann für den jeweiligen Fall durch wenige und einfache Vorversuche in einfacher Weise ermittelt werden. Bei Bedarf kann die Breite des Dosierspalts des horizontalen Walzenpaares und/oder die Schlauchfortbewegungsgeschwindigkeit auch ohne Unterbrechung des Verfahrensablaufs verändert werden.

Der den Dosierspalt des horizontalen Walzenpaares verlassende mit Stützluft gefüllte Schlauch mit dünner Schicht aus wässriger Kunststoff-Dispersion wird vertikal in Richtung von unten nach oben geführt und der Einwirkung von Wärme unterworfen, deren Temperatur hinreicht, das Dispersionsmittel der flüssigen dünnen Schicht auf der Schlauchinnenseite zu vertreiben und dadurch einen unterbrechungsfreien Kunststoff-Filmüberzug auf dieser auszubilden.

Vor der Wärmebeaufschlagung wird der «Schlauch mit Stützluft in seinem Hohlraum» vorteilhaft durch eine Laufstrecke bestimmter Länge hindurchgeführt. Die Länge dieser Strecke beträgt vorteilhaft ca. 40 bis 60 cm. Die Luft im Bereich der Luftstrecke hat Raumtemperatur.

Die im Hohlraum des aus dem Dosierspalt ausgetretenen Schlauchstücks erforderliche Stützluft wird zu Beginn der Verfahrensdurchführung in diesen Hohlraum eingeführt; der Schlauchinnendruck wird währennd der Verfahrensdurchführung dadurch aufrechterhalten, dass der Schlauch nach erfolgter Ausbildung des Kunststoff-Filmüberzugs fortlaufend, entlang einer schmalen Zone über seine gesamte Breite flach zusammengepresst wird, beispielsweise indem man ihn durch den Quetschspalt eines Quetschwalzenpaares hindurchführt.

Die dreh- sowie antreibbar ausgebildeten Walzen dieses Quetschwalzenpaares sind beispielsweise durch Motoren angetrieben; die Walzen haben jeweils gleiche Drehrichtung.

Der Schlauch wird durch dieses Quetschwalzenpaar und gegebenenfalls durch ein Quetschwalzenpaar vor dem Dosierspalt transportiert; das den Dosierspalt bildende Walzenpaar durchläuft der Schlauch möglichst spannungsfrei.

Nach der Trocknung des Schlauchs durch Wärmebeaufschlagung und Ausbildung eines Filmüberzugs auf seiner Innenseite wird er gegebenenfalls mit Wasser befeuchtet, beispielsweise durch Besprühen, und dabei vorteilhaft auf einen Wassergehalt im Bereich von 8 bis 12 Gew.-%, beispielsweise auf einen solchen von 10 Gew.-%, jeweils bezogen auf sein Gesamtgewicht, gebracht. Der Schlauch wird dann auf eine rotierbar sowie antreibbar ausgebildete und angetriebene Vorratsrolle aufgewickelt. Die Umfangsgeschwindigkeit der angetriebenen Vorratsrolle liegt beispielsweise im Bereich zwischen 8 und 120 m/min, beispielsweise besitzt sie eine Umfangsgeschwindigkeit von 30 m/min.

Die Walzen des den Dosierspalt bildenden Walzenpaares sind jeweils drehbar ausgebildet sowie antreibbar. Der Antrieb der Walzen kann mittels Motoren erfolgen. Ihre Drehrichtung entspricht der Fortbewegungsrichtung des Schlauchs.

Eine der beiden Walzen des den Dosierspalt bildenden Walzenpaares ist anstellbar ausgebildet, die jeweils gewünschte Breite des Dosierspalts ist durch entsprechende Horizontalverschiebung der anstellbaren Walze des Walzenpaares einstellbar und in der gewünschten Position fixierbar.

Das Dosierwalzenpaar ist als Einheit ortsfest gelagert. Die Wärmebeaufschlagung des Schlauchs zur Trocknung der flüssigen Schicht aus wässriger Dispersion auf der Innenseite des mit Stützluft gefüllten Schlauchs erfolgt beispielsweise dadurch, dass man diesen vertikal in Richtung von unten nach oben durch einen geraden Trockentunnel hindurch führt, beispielsweise einen solchen, der mit Infrarot-Heizelementen ausgestattet ist. Am Anfang des Trockentunnels wird der Schlauch beispielsweise auf eine Temperatur von ca. 80°C und am Ende desselben auf eine Temperatur von beispielsweise 140°C erhitzt.

Die Befeuchtung des durch die Wärmeeinwirkung getrockneten Schlauchs mit Wasser kann mittels einer mit Wasser beaufschlagten Sprühdose erfolgen, an der der Schlauch vorbeigeführt und besprüht wird.

Gemäss einer Variante der Erfindung wird das Verfahren in der Weise durchgeführt, dass man die Aussenseite des aus dem Dosierspalt des Dosierwalzenpaares austretenden und teilweise flachliegenden, mit Stützluft gefüllten Schlauchs, der eine flüssige, dünne Schicht aus wässriger Kunststoff-Dispersion auf seiner Innnenseite aufweist und in Richtung von unten nach oben vertikal geführt wird, fortlaufend über ihre gesamte Breite entlang einer geraden, schmalen Zone reibschlüssiger Krafteinwirkung unterwirft, ohne dass dabei die aufeinanderzuweisenden Oberflächen der flüssigen Schicht aus wässriger Kunststoff-Dispersion auf seiner Innenseite miteinander in Berührung kommen. Man bringt dazu die bezeichneten Zonen der Schlauchaussenseiten jeweils fortlaufend in reibschlüssigen Kontakt mit jeweils einem Teil der gesamten Umfangsfläche jeweils einer um ihre Achse rotierbaren, angetriebenen Glättwalze eines Glättwalzenpaares mit horizontal verlaufenden Walzachsen. Vorteilhafterweise bringt man zunächst die eine Aussenseite des mit Stützluft gefüllten, teilweise flachliegenden Schlauchs mit flüssiger Schicht auf seiner Innenseite mit einem Teil der Umfangsfläche einer in Fortbewegungsrichtung des Schlauchs ersten Walze des Glättwalzenpaares in reibschlüssigen Kontakt und danach die andere Aussenseite des Schlauchs mit einem Teil der Umfangsfläche einer in Fortbewegungsrichtung des Schlauchs oberhalb der ersten Glättwalze angeordneten zweiten Glättwalze.

Die geraden schmalen Zonen, im Bereich derer die Aussenseite des Schlauchs jeweils mit einem Teil der Umfangsfläche einer Glättwalze des Glättwalzenpaares in reibschlüssigem Kontakt steht, sind jeweils schmal in bezug auf die Breite des teilweise flachliegenden, mit Stützluft gefüllten Schlauchs.

Das in Richtung der Schlauchfortbewegung oberhalb des Dosierspalts sowie unterhalb des Trockentunnels angeordnete Glättwalzenpaar, bei dem die parallelabständigen Umfangsflächen der Walzen im Bereich ihrer aufeinanderzuweisenden Teilumfangsflächen einen Spaltraum begrenzen, ist derart ausgebildet, dass die Achsen der Walzen jeweils horizontal verlaufen.

Die Walzen des Glättwalzenpaares sind dabei vorteilhaft in der Weise zueinander angeordnet, dass sie sich jeweils in parallelabständigen horizontalen Ebenen erstrecken und die dabei dem Dosierspalt nähergelegene Glättwalze wird dabei als erste und die andere als zweite Glättwalze des Glättwalzenpaares bezeichnet.

Die beiden Glättwalzen haben bevorzugt gleichen Durchmesser und bestehen aus Werkstoff, der ihnen Formstabilität verleiht, bevorzugt bestehen die oberflächenglatten Walzen aus Stahl.

Die Glättwalzen sind jeweils ortsfest gelagert und um ihre Achse rotierbar ausgebildet. Die Glättwalzen sind jeweils antreibbar, sie sind jeweils durch Motoren angetrieben. Die Umdrehungsrichtung der Glättwalzen ist vorteilhaft jeweils gegenläufig zu der Fortbewegungsrichtung des Schlauchs.

Bei der Durchführung des Verfahrens gemäss der besonderen Abwandlung wird der teilweise flachgelegte, mit Stützluft gefüllte Schlauch mit seinen Aussenseiten jeweils in reibschlüssigen Kontakt mit einem Teil der Umfangsfläche jeweils einer Glättwalze gebracht, um eine noch bessere Vergleichmässigung der flüssigen Schicht auf der Schlauchinnenseite hervorzurufen, bevor der Schlauch der Wärmeeinwirkung unterworfen wird. Die Führung des Schlauchs in teilweise flachliegendem, mit Stützluft gefülltem Zustand ist vorteilhaft, weil auf diese Weise der angestrebte reibschlüssige Kontakt der Schlauchaussenseite mit den Umfangsflächen der Glättwalzen in einfacher Weise erreichbar ist.

Der das Glättwalzenpaar verlassende Schlauch wird vertikal und in Richtung von unten nach oben weitergeführt und dann entsprechend der Durchführung der ersten Verfahrensvariante der Einwirkung von Wärme unterworfen, am Quetschspalt eines Quetschwalzenpaares partiell flach zusammengepresst und auf eine angetriebene Vorratsrolle aufgerollt. Bevor der Schlauch im Quetschspalt des Quetschwalzenpaares flach zusammengepresst wird, befeuchtet man ihn gegebenenfalls mit Wasser, beispielsweise durch Besprühen mittels einer Sprühdose.

Die zur Durchführung des erfindungsgemässen Verfahrens geeigneten Vorrichtungen umfassen jeweils auch die erforderlichen Einrichtungen zur lagefixierten Halterung der einzelnen Vorrichtungselemente.

Für die erfindungsgemässe Verfahrensdurchführung ist es charakteristisch, dass der Cellulosehydratschlauch in derjenigen Zeitspanne, in der er in Kontakt mit wässriger Kunststoff-Dispersion der angegebenen Konzentration steht, jeweils nur eine solche Menge Wasser aufnimmt bzw. dass nur eine derartig geringe Menge Wasser aus der flüssigen Schicht in den Cellulosehydratschlauch diffundiert, dass dabei der Wasseranteil im Cellulosehydratschlauch deutlich geringer ist als der, der dem Quellwert (Wasserrückhaltungsvermögen) des Cellulosehydratschlauchs entspricht.

Der Wassergehalt des Schlauchs bei der Verfahrensdurchführung ist vorzugsweise kleiner als 30%, insbesondere 20 bis 30% des Wasserrückhaltevermögens und beträgt beispielsweise nur ca. ein Viertel derjenigen Wassermenge, die dem Quellwert des Ausgangsschlauchs entspricht. (Bestimmung des Quellwerts nach DIN 53 814; «Färberei- und textilchemische Untersuchungen», A. Agster, S. 450, Springer Verlag 1967, 10, Auflage.)

Die Vorteile der Erfindung gegenüber dem Bekannten gehen aus nachfolgenden Vergleichen hervor:

Zur Herstellung eines Filmüberzugs beispielsweise mit einer Dicke entsprechend einem Flächengewicht von 10 g Kunststoff pro m² Substratoberfläche müssen nach dem bekannten Verfahren bei Verwendung einer wässrigen Kunststoff-Dispersion üblicher Konzentration, beispielsweise von 6,5 Gew.-% an dispergiertem Kunststoff, 143,8 g Wasser pro m² Substratoberfläche durch Wärmeeinwirkung von der Schlauchoberfläche im Hohlraum des Schlauchs vertrieben werden, um den Filmüberzug zu bilden.

Zur Ausbildung eines Kunststoffüberzugs mit der gleichen Dicke ist dagegen bei Durchführung der erfindungsgemässen Verfahrensweise bei Verwendung einer beispielsweise 30 gew.%igen Kunststoff-Dispersion nur 23,3 g Wasser pro m² Substratoberfläche durch Wärmeeinwirkung zu vertreiben.

Das erfindungsgemässe Verfahren in seinen beiden Varianten erfordert demnach zur Herstellung eines Kunststoff-Filmüberzugs einer Dicke entsprechend 10 g Kunststoff pro m² Substratoberfläche nur ein Sechstel derjenigen Wärmeenergie, die bei der Durchführung der bekannnten Beschichtungsverfahren zur Ausbildung eines Filmüberzugs der gleichen Dicke erforderlich ist.

Das erfindungsgemässe Verfahren erlaubt zudem wegen der geringen Menge des zu vertreibenden Wassers aus der flüssigen Schicht aus wässriger Kunststoff-Dispersion zur Ausbildung eines Kunststoff-Films auf der Schlauchinnenseite eine erhebliche Steigerung der Beschichtungsgeschwindigkeit.

Durch das erfindungsgemässe Verfahren werden wegen der bei seiner Durchführung verwendeten wässrigen Kunststoff-Dispersion mit hohem Anteil an dispergiertem Kunststoff aus folgendem Grunde Beschichtungsmängel vermieden: Ein Cellulosehydratschlauch mit einem Quellwert von beispielsweise 120% als Verfahrensausgangsprodukt muss nach den bekannten Verfahren zur Innenbeschichtung mit einer beispielsweise 6,5 gew.%igen wässrigen Kunststoff-Dispersion und zur Ausbildung eines Filmüberzugs entsprechend einer Dicke von beispielsweise 10 g Kunststoff pro m² Substratoberfläche 143,8 g Wasser pro m² aufnehmen, welches durch Diffusion durch die Schlauchwand transportiert werden muss.

Bei der Durchführung des erfindungsgemässen Verfahrens wird dagegen bei Verwendung einer Kunststoff-Dispersion, die beispielsweise 30 Gew.-% dispergierten Kunststoffanteil enthält, der Ausgangsschlauch mit dem angegebenen Quellwert von ca. 120% nur leicht angefeuchtet. Da der Ausgangsschlauch bei der Durchführung des erfindungsgemässen Verfahrens infolge des geringen Wasseranteils in seiner Schlauchwand im Verlaufe seiner Herstellung in nur praktisch unerheblichem Ausmass schrumpft, ist es im Gegensatz zu bekannten Verfahren nicht erforderlich, diesem entgegenzuwirken.

Beschichtungsfehler, die sich bei radialer Dehnung des Schlauchs und freiem Ablauf bei entsprechend hohem Schlauchinnendruck zur Verhinderung des Schlauchschrumpfs ergeben und auf herstellungsbedingte Unterschiede der Schlauchwanddicke zurückzuführen sind, werden bei der Durchführung des erfindungsgemässen Verfahrens vermieden.

Da zur Ausbildung des unterbrechungsfreien Kunststoff-Filmüberzugs auf der Schlauchinnenseite beim Vertreiben des Dispersionsmittels aus der flüssigen Schicht aus wässriger Kunststoff-Dispersion die gesamte Wassermenge der flüssigen Schicht durch Diffusion durch die Schlauchwand nach aussen abtransportiert werden muss, bestimmt die Diffusionsgeschwindigkeit sowie der Wasseranteil der flüssigen Schicht aus wässriger Dispersion wesentlich die Geschwindigkeit, mit der das Beschichtungsverfahren durchführbar ist.

Der Wasseranteil der dünnen Schicht aus wässriger Kunststoff-Dispersion auf der Innenseite des aus dem Dosierspalt des Walzenpaares austretenden Schlauchs mit Stützluft in seinem Hohlraum ist nur so gross, dass dieser eine für praktische Zwecke unerhebliche Schrumpfung des Ausgangsschlauchs bei der Verfahrensdurchführung zur Folge hat.

Die Schlauchinnenbeschichtung erfolgt demnach, ohne dass dabei der Schlauch praktisch erheblich schrumpft.

Die Vorteile des erfindungsgemässen Verfahrens in seinen beiden Ausbildungen werden nachfolgend kurz zusammengefasst:

1. Anwendung von wässriger Kunststoff-Dispersion mit hohem Anteil an dispergiertem Kunststoff, energetisch günstige Verfahrensdurchführung, Möglichkeit das Verfahren mit einer Geschwindigkeit durchzuführen, die doppelt bis vierfach so gross ist, wie die Beschichtungsgeschwindigkeit bei bekannnten Verfahren, sowie Vermeidung von erheblichem Schrumpf des Schlauchs.

2. Gezielte Dosierung und Vergleichmässigung des Dispersionsauftrags; Vermeidung von Ablauffehlern.

3. Weichmacheranreicherung im Dispersionssumpf wirkt sich wegen des hohen Anteils an Dispergiertem nur unerheblich auf die Qualität des Filmüberzugs aus.

4. Die Längsrelaxation des Schlauchs wird nicht beeinträchtigt, der Längsverzug lässt sich gering halten.

5. Geringer Druck im Schlauchhohlraum während des Beschichtens im Dosierspalt des Walzenpaares erfordert einen entsprechend niedrigen Aussenanpressdruck, so dass die Beschichtungskanten des Schlauchs beim anschliessenden Lagern des Verfahrenserzeugnisses praktisch keine unerwünschte Veränderung (brüchig werden) erfahren.

6. Das Beschichtungsverfahren ist wegen der Verwendung wässriger Kunststoff-Dispersion mit angegebenem Gehalt an dispergiertem Kunststoff bzw. an Dispersionsmittel nahezu unabhängig von den Diffusionseigenschaften des Ausgangsschlauchs, somit ist genannte Erhöhung der Beschichtungsgeschwindigkeit möglich.

7. Die Verfahrensdurchführung wird, ausgehend von einem aufzubringenden Filmüberzug bestimmter Dicke, durch den im Verhältnis zu den bekannten Beschichtungsverfahren geringen Gesamtbedarf an wässriger Dispersion zur Innenbeschichtung des Schlauchstücks erheblich erleichtert. Bei sehr langen Schlauchstücken muss gemäss dem erfindungsgemässen Verfahren die Beschichtungsflüssigkeit in wesentlich längeren Zeitabständen nachgefüllt werden als bei bekannten Verfahren, wobei der Schlauchabfall durch das zum Nachfüllen notwendige Einschneiden des Schlauchs wesentlich verringert wird.

Das Verfahren in seinen beiden Variantenn sowie die zu deren Durchführung geeigneten Vorrichtungen werden nachfolgend anhand der Zeichnung beispielhaft beschrieben.

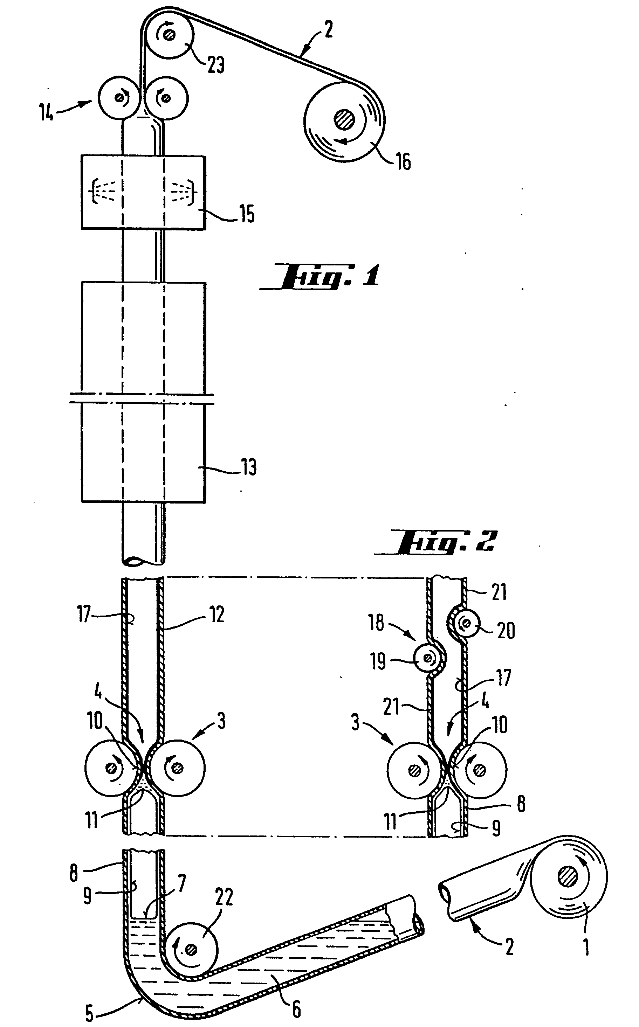

In Fig. 1 bedeutet 1 eine Vorratsrolle, auf welcher der auf seiner Innenseite zu beschichtende, faserverstärkte Cellulosehydratschlauch 2 flachliegend aufgewickelt ist; 3 bedeutet ein horizontales Walzenpaar mit Dosierspalt 4; es ist 5 eine Schlauchschlaufe. Im Hohlraum des die Schlauchschlaufe bildenden Schlauchteils befindet sich eine Vorratsmenge wässriger Kunststoff-Dispersion 6, wobei 7 den Spiegel des im vertikalen Teil der Schlauchschlaufe befindlichen Teils der Vorratsmenge wässriger Kunststoff-Dispersion 6 bildet. 8 ist ein vertikal verlaufendes, im Querschnitt kreisförmiges Schlauchstück mit flüssiger Schicht 9 aus wässriger Dispersion auf der Innenseite. 10 ist der in Spalt 4 des horizontalen Walzenpaares 3 teilweise flachgelegte Schlauch 2, es ist 11 ein Materialstau aus wässriger Dispersion vor bzw. im Dosierspalt, 12 der aus dem Walzenspalt 4 des Walzenpaares 3 austretende, mit Stützluft gefüllte, vertikal in Richtung von unten nach oben verlaufende Schlauch, 13 ein mit Heissluft beaufschlagter Trockentunnel, 14 ein Quetschwalzenpaar mit dreh- sowie antreibbar ausgebildeten, angetriebenen Walzen, 15 eine Sprüheinrichtung zur Befeuchtung des Schlauchs 2 mit Wasser, 16 eine antreibbare und angetriebene Vorratsrolle, auf die der Schlauch aufgewickelt und durch die er längsaxial fortbewegt wird.

17 bedeutet die dünne, flüssige Schicht aus wässriger Kunststoff-Dispersion auf der Innenseite des Schlauchteils 12. Es ist 22 eine erste und 23 eine zweite Umlenkrolle.

In der Fig. 2 ist als Ausschnitt das zur Durchführung der zweiten Verfahrensvariante mit Glättwalzenpaar Wesentliche dargestellt, in welchem es sich von der in Fig. 1 gezeigten Variante unterscheidet.

In der Fig. 2 haben die Ziffern 1 bis 16 dieselbe Bedeutung wie in Fig. 1. Es ist 18 ein Glättwalzenpaar mit horizontal verlaufenden Walzachsen, wobei 19 die erste und 20 die zweite Glättwalze des Paares ist. 21 ist der teilweise flachliegende mit Stützluft gefüllte Schlauch mit dünner Schicht aus wässriger Kunststoff-Dispersion auf seiner Innenseite. Die Lagerung der einzelnen Elemente der Vorrichtungen, die Mittel zum Antreiben der Walzen des horizontalen Quetschwalzenpaares, der horizontalen Glättwalzen sowie der Vorratsrolle sind aus Gründen zeichnerischer Vereinfachung nicht dargestellt. In den Figuren der Zeichnung ist die Kunststoffschicht auf der Innenseite des Verfahrenserzeugnisses ebenfalls aus Gründen zeichnerischer Vereinfachung nicht dargestellt. Die in den Figuren der Zeichnung dargestellten Elemente, insbesondere die Dicken der flüssigen Schichten 9 und 17 bzw. 21 sowie die Höhe des teilweise flachgelegten Schlauchs 21 sind in der Zeichnung nicht massstabsgerecht wiedergegeben.

**Patentansprüche**

1. Verfahren zur Herstellung einer schlauchförmigen Verpackungshülle, insbesondere Wursthülle, auf Basis von Cellulose mit einem Überzug auf der Innenseite, bei dem der Schlauch zunächst längsaxial in Richtung von oben nach unten anschliessend von unten nach oben unter Bildung einer Schlauchschlaufe fortbewegt wird, wobei im Bereich der Schlauchschlaufe im Schlauchhohlraum sich eine eingeschlossene Menge Beschichtungsflüssigkeit befindet, bestehend aus einer wässrigen Kunststoff-Dispersion, die wenigstens 20 Gew.-% Kunststoff, bezogen auf das Gesamtgewicht der Beschichtungsflüssigkeit, enthält, bei dem ferner der fortlaufend von unten nach oben fortbewegte Schlauchteil oberhalb des Spiegels der Beschichtungsflüssigkeit vertikal durch einen Spalt hindurchgeführt wird, der so eingestellt ist, dass die Masse der Beschichtungsflüssigkeit im Spalt zurückgehalten und nur ein Film geringer Dicke aus Beschichtungsflüssigkeit auf der Innenseite des aus dem Spalt austretenden Schlauchs ausgebildet wird, bei dem der Schlauch mit Stützgas gefüllt und aufgeblasen der Einwirkung von Wärme unterworfen wird, wobei der innere Überzug ausgebildet wird, der Schlauch abgekühlt, gegebenenfalls befeuchtet, flachgelegt und aufgewickelt wird, dadurch gekennzeichnet, dass die Spaltbreite in Abhängigkeit von der geforderten Dicke der Innenbeschichtung zur Dosierung der Beschichtungsflüssigkeit eingestellt wird, dass der Schlauch unmittelbar nach Verlassen des Spalts mit Stützgas gefüllt und aufgeblasen über eine Wegstrecke nach oben und dann unter Einwirkung von Wärme weiterhin nach oben geführt wird, wobei sich ein unterbrechungsfreier innerer Filmüberzug mit gleichmässiger Dicke ausbildet.

2. Verfahren nach Anspruch 1, dadurch gekennzeichnet, dass die zur Beschichtung verwendete wässrige Kunststoff-Dispersion einen Anteil an dispergiertem Kunststoff im Bereich von 20 bis 40 Gew.-%, bezogen auf das Gesamtgewicht der Dispersion, besitzt.

3. Verfahren nach Anspruch 1 oder 2, dadurch gekennzeichnet, dass der Schlauch mit einer Geschwindigkeit im Bereich von 8 bis 120, insbesondere 20 bis 80 m/min fortbewegt wird.

4. Verfahren nach einem der Ansprüche 1 bis 3, dadurch gekennzeichnet, dass der Dosierspalt eine Breite besitzt, dass die Dicke des gebildeten unterbrechungsfreien Filmüberzugs einem Flächengewicht von 6 bis 20, insbesondere 8 bis 12 g Kunststoff pro m$^2$ Substratoberfläche entspricht.

5. Verfahren nach einem der Ansprüche 1 bis 4, dadurch gekennzeichnet, dass der Schlauch aus Cellulosehydrat besteht, dass das Wasseraufnahmevermögen des Cellulosehydratschlauchs vorzugsweise 120 bis 140% beträgt und die vom Schlauch während der Beschichtung aufgenommene Wassermenge maximal 30%, insbesondere 20 bis 30% des Wasseraufnahmevermögens des Schlauchs beträgt.

6. Verfahren nach einem der Ansprüche 1 bis 5, dadurch gekennzeichnet, dass man die Aussenseiten des aus dem Spalt ausgetretenen Schlauchs vor Beaufschlagung mit Wärme entlang einer geraden schmalen Zone reibschlüssiger Krafteinwirkung unterwirft, wobei die aufeinanderzuweisenden Oberflächen der Innenbeschichtung sich gegenseitig nicht berühren.

7. Vorrichtung zur Durchführung des Verfahrens nach Anspruch 1, umfassend ein horizontales Walzenpaar (3), durch das der mit Beschichtungsflüssigkeit auf seiner Innenseite versehene Schlauch im flachgelegten Zustand (10) hindurchgeführt wird, einen nachgeordneten geraden Trockentunnel (13), ein nach dem Trockentunnel (13) angeordnetes Quetschwalzenpaar (14) und eine nachgeordnete Rolle (16) zum Aufwickeln des Verfahrenserzeugnis-

15 0 037 023 16

ses, dadurch gekennzeichnet, dass das horizontale Walzenpaar (3) einen einstellbaren Dosierspalt (4) aufweist, dass der Trockentunnel (13) nach oben gerichtet ist, dass das Quetschwalzenpaar (14) oberhalb des Trockentunnels (13) angeordnet ist und dass die Vorrichtung gegebenenfalls eine Sprüheinrichtung (15) zur Befeuchtung des Schlauchs, die nach dem Trockentunnel (13) und vor dem Quetschwalzenpaar (14) angeordnet ist, umfasst.

8. Vorrichtung nach Anspruch 7, dadurch gekennzeichnet, dass sie zur Durchführung des Verfahrens nach Anspruch 6 in Fortbewegungsrichtung des Schlauchs oberhalb des horizontalen Walzenpaares (3) und vor dem Trockentunnel (13) angeordnete rotierbare Walzen (19, 20) umfasst.

## Claims

1. Process for the manufacture of a tubular packaging sheat, in particular a sausage casing, based on cellulose having a coating on its inside, in which the tubing is transported in the direction of its longitudinal axis, first in a downward and thereafter in an upward direction, thus forming a tubing loop, with a quantity of coating liquid being enclosed in the cavity of the tubing in the area of the tubing loop, the coating liquid comprising an aqueous polymeric dispersion which contains not less than 20% by weight of polymer, relative to the total weight of the coating liquid, in which the portion of the tubing which is continuously transported in the upward direction is, furthermore, passed vertically through a nip above the level of the coating liquid, the nip being adjusted so that the bulk of the coating liquid is retained in the nip and only a film of low thickness of the coating liquid is formed on the inside of the tubing issuing from the nip and in which the tubing is filled with a supporting gas, the inflated tubing is subjected to the action of heat, thus forming the internal coating, the tubing is cooled, optionally moistened laid flat and wound up, characterised in that the width of the nip is adjusted for metering the coating liquid as a function of the required thickness of the internal coating and that the tubing is filled with supporting gas immediately after leaving the nip and the inflated tubing is transported upwards over a distance and is then further transported in the upward direction under the action of heat, thus forming an uninterrupted internal film coating of uniform thickness.

2. A process as claimed in claim 1, wherein the aqueous polymeric dispersion used for coating has a content of dispersed polymer in the range from 20 to 40% by weight, relative to the total weight of the dispersion.

3. A process as claimed in claim 1 or claim 2, wherein the tubing is transported at a speed in the range from 8 to 120 m/min. particularly from 20 to 80 m/min.

4. A process as claimed in any of claims 1 to 3, wherein the metering nip is of such width that the thickness of the uninterrupted film coating formed corresponds to a weight per unit area of 6 to 20, particularly of 8 to 12 g of polymer per $m^2$ of substrate surface.

5. A process as claimed in any of claims 1 to 4, wherein the tubing comprises cellulose hydrate, wherein the water absorption capacity of the cellulose hydrate tubing is preferably from 120 to 140% and the amount of water absorbed by the tubing in the coating procedure is at most 30%, particularly from 20 to 30% of the water absorption capacity of the tubing.

6. A process as claimed in any of claims 1 to 5, wherein, prior to the application of heat, the outer faces of the tubing which has issued from the nip, are subjected to the action of frictionally transmitted force along a straight narrow zone, such that the surfaces of the internal coating, which point towards each other, do not contact each other.

7. Apparatus for carrying out the process as claimed in claim 1, including a horizontal pair of rolls (3), through which the tubing provided with coating liquid on its inside is passed in the laid-flat state (10), a downstream straight drying tunnel (13), a pair of nip rolls (14) located behind the drying tunnel (13) and a downstream reel (16) for winding up the process product, wherein the horizontal pair of rolls (3) has an adjustable metering nip (4), the drying tunnel (13) has an upward direction, the pair of nip rolls (14) is located above the drying tunnel (13) and the apparatus is optionally equipped with a spray device (15) for moistening the tubing, which is located downstream of the drying tunnel (13) and upstream of the pair of nip rolls (14).

8. An apparatus as claimed in claim 7, wherein, for carrying out the process according to claim 6, rotatable rolls (19, 20) are arranged above the horizontal pair of rolls (3) and before the drying tunnel (13), viewed in the direction in which the tubing is transported.

## Revendications

1. Procédé pour la fabrication d'une gaine d'emballage tubulaire, en particulier d'un boyau pour saucisse, cellulosique avec un revêtement sur la face interne, dans lequel le tuyau est d'abord transporté selon son axe longitudinal dans une direction descendante, puis dans une direction ascendante en formant une boucle de tuyau, où au niveau de la boucle dans la cavité du tuyau se trouve une quantité incorporée de liquide de revêtement consistant en une dispersion aqueuse de matière plastique qui contient au moins 20% en poids de matière plastique par rapport au poids total du liquide de revêtement, puis la partie de tuyau au-dessus du niveau du liquide de revêtement, transportée en continu dans une direction ascendante, passe verticalement dans une fente réglée de telle sorte que la masse du liquide de revêtement est maintenue dans la fente et seul un film de faible épaisseur de liquide de revêtement est formé sur la face interne du tuyau sortant de la fente, puis le tuyau est rempli et gonflé avec de l'air de support et soumis à l'action de la chaleur pour former le revêtement interne, le tuyau est refroidi, éventuellement humidifié, mis à plat et enroulé, procédé caractérisé en ce que la largeur de la fente est réglée en fonction de l'épaisseur désirée pour le revêtement interne,

9

pour doser le liquide de revêtement, le tuyau est rempli et gonflé avec de l'air de support directement à sa sortie de la fente, sur une certaine distance vers le haut, puis entraîne de nouveau vers le haut sous l'action de la chaleur, de manière à former un revêtement de film interne, ininterrompu, d'épaisseur régulière.

2. Procédé selon la revendication 1, caractérisé en ce que la dispersion aqueuse de matière plastique utilisée pour le revêtement a une teneur en matière plastique dispersée comprise entre 20 et 40% en poids, par rapport au poids total de la dispersion.

3. Procédé selon l'une des revendications 1 ou 2, caractérisé en ce que le tuyau est transporté à une vitesse de 8 à 120, en particulier de 20 à 80 m/mn.

4. Procédé selon l'une quelconque des revendications 1 à 3, caractérisé en ce que la fente de dosage a une largeur telle que l'épaisseur du revêtement de film ininterrompu formé correspond à un poids par unité de surface de 6 à 20 g, en particulier de 8 à 12 g de matière plastique par m$^2$ de surface de substrat.

5. Procédé selon l'une quelconque des revendications 1 à 4, caractérisé en ce que le tuyau est en hydrate de cellulose, la capacité d'absorption d'eau du tuyau en hydrate de cellulose atteint de préférence de 120 à 140% et la quantité d'eau fixée par le tuyau pendant le revêtement est au maximum de 30%, en particulier de 20 à 30% de la capacité d'absorption d'eau du tuyau.

6. Procédé selon l'une quelconque des revendications 1 à 5, caractérisé en ce qu'avant l'exposition à la chaleur, on soumet les faces extérieures du tuyau sortant de la fente à l'action d'une force de frottement par contact le long d'une étroite zone rectiligne, les surfaces opposées du revêtement interne ne reposant pas alors l'une contre l'autre.

7. Dispositif pour la mise en oeuvre du procédé selon la revendication 1, comprenant une paire de cylindres horizontaux (3), que traverse le tuyau en l'état aplani (10) avec un liquide de revêtement sur sa face interne, suivie d'un tunnel de séchage rectiligne (13), une paire de rouleaux presseurs (14) installée après le tunnel de séchage (13) et un rouleau final pour l'enroulement du produit de l'invention, dispositif, caractérisé en ce que la paire de cylindres horizontaux (3) présente une fente de dosage réglable (4), que le tunnel de séchage (13) est dirigée vers le haut, que la paire de rouleaux presseurs (14) est située au-dessus du tunnel de séchage (13) et que le dispositif comprend éventuellement un système de pulvérisation (15) pour l'humidification du tuyau, installé après le tunnel de séchage (13) et avant la paire de rouleaux presseurs (14).

8. Dispositif selon la revendication 7, caractérisé en ce que, pour la mise en oeuvre du procédé selon la revendication 6, il comprend dans la direction de transport du tuyau des cylindres rotatifs (19, 20), installés au-dessus de la paire de cylindres horizontaux et avant le tunnel de séchage (13).

*Fig. 1*

*Fig. 2*